(19) Europäisches Patentamt
European Patent Office
Office européen des brevets

(11) **EP 3 842 348 B1**

(12) **FASCICULE DE BREVET EUROPEEN**

(45) Date de publication et mention
de la délivrance du brevet:
**04.05.2022 Bulletin 2022/18**

(21) Numéro de dépôt: **20216669.0**

(22) Date de dépôt: **22.12.2020**

(51) Classification Internationale des Brevets (IPC):
***B64G 1/24*** *(2006.01)*

(52) Classification Coopérative des Brevets (CPC):
**B64G 1/242; B64G 1/244; B64G 1/50; B64G 1/503;**
B64G 1/407

(54) **PROCEDE DE CONTROLE DE L'ARGUMENT DE LATITUDE D'UN SATELLITE**

VERFAHREN ZUR STEUERUNG DES BREITENGRAD-ARGUMENTS EINES SATELLITEN

METHOD FOR MONITORING THE ARGUMENT OF LATITUDE OF A SATELLITE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.12.2019 FR 1915537**

(43) Date de publication de la demande:
**30.06.2021 Bulletin 2021/26**

(73) Titulaire: **Airbus Defence and Space SAS**
**31402 Toulouse Cedex 4 (FR)**

(72) Inventeurs:
• **DARBOUX, Tristan**
**31402 TOULOUSE Cedex 04 (FR)**
• **LAINE, Ivan**
**31402 TOULOUSE Cedex 04 (FR)**

(74) Mandataire: **Ipside**
**6, Impasse Michel Labrousse**
**31100 Toulouse (FR)**

(56) Documents cités:
**EP-A1- 0 794 120        GB-A- 2 282 114**
**US-A- 3 057 579         US-A1- 2004 140 402**
**US-A1- 2016 376 032**

**Description**

**Domaine technique**

La présente invention appartient au domaine du maintien à poste d'engins spatiaux, tels que des satellites.

Plus particulièrement, l'invention appartient au domaine du maintien à poste de satellites dans le cadre d'un système de positionnement par satellites.

**Etat de l'art**

Lorsqu'il est placé en orbite, un satellite peut tendre à s'éloigner de sa position en orbite à cause de diverses perturbations orbitales. Une perturbation orbitale, désignant de manière générale toute force exercée sur le satellite autre que la force de gravitation exercée par la Terre sous hypothèse d'une répartition de masse à symétrie sphérique, peut plus particulièrement provenir des forces d'attraction exercées par la Lune et le Soleil ou encore la pression de radiation solaire.

En particulier, le satellite comporte, sur deux faces sensiblement à l'opposé l'une de l'autre, des radiateurs permettant d'évacuer l'énergie calorifique générée à l'intérieur du satellite (voir par exemple le document US3057579).

Une source particulière de perturbation orbitale est la dissipation thermique asymétrique par les radiateurs, qui génère une force perturbatrice provoquant une accélération perturbatrice du satellite.

Le maintien d'un satellite à poste, en particulier dans le cadre d'un système de positionnement par satellites, consiste à corriger la trajectoire de ce satellite amené à sortir de son orbite nominale de fonctionnement sous l'effet des perturbations orbitales.

En particulier, les perturbations orbitales peuvent entraîner une dérive d'un argument de latitude du satellite.

Il est connu de réaliser le maintien d'un satellite à poste au moyen de tuyères chimiques, lesquelles sont orientées de sorte à assurer une poussée dans la direction et le sens voulus, pour diriger et accélérer ou freiner le satellite.

Dans le cadre d'un système de positionnement par satellites, ce type de maintien à poste est réalisé au bout d'une période d'un certain nombre d'années, par exemple tous les cinq à sept ans, pour limiter les interruptions de fonctionnement du satellite, période au cours de laquelle le satellite présente une légère dérive. Une fois que le satellite est retourné en attitude mission, la nouvelle orbite est transmise aux utilisateurs.

Un tel type de maintien à poste présente donc le double inconvénient suivant : d'une part il nécessite des interruptions de fonctionnement du satellite pour remise en attitude mission, et d'autre part le satellite est amené à dériver au cours de son fonctionnement, cette dérive n'étant corrigée qu'au bout d'une période relativement importante de quelques années.

L'invention propose de résoudre les problèmes de l'art antérieur, en exploitant les réchauffeurs du satellite pour produire une accélération permettant de maîtriser l'orbite du satellite.

**Exposé de l'invention**

L'invention concerne un procédé de contrôle d'orbite d'un satellite comportant un corps ayant deux faces opposées sensiblement parallèles entre elles comprenant chacune au moins un réchauffeur. Selon l'invention, le procédé comporte :

- une étape de détermination d'une évolution d'une dérive libre d'un argument de latitude du satellite ;
- une étape de contrôle de la dérive de l'argument de latitude du satellite au cours de laquelle une loi de consigne thermique est appliquée à au moins un des réchauffeurs, en fonction de l'élévation solaire, pour créer un écart de puissance thermique cible entre les deux faces opposées, lequel écart de puissance thermique est à l'origine d'une force présentant une composante tangentielle à une orbite du satellite destinée à contrebalancer la dérive libre de l'argument de latitude du satellite et permettre à l'argument de latitude de rester dans une fenêtre angulaire prédéterminée.

Dans un mode de mise en œuvre, l'étape de contrôle des réchauffeurs comporte au moins une phase de détermination d'un impact de la loi de consigne thermique sur le long terme afin d'établir des valeurs de consigne nécessaires pour rester dans la fenêtre angulaire prédéterminée.

Dans un mode de mise en œuvre, la loi de consigne thermique est telle que :

- pour contrebalancer une augmentation de l'argument de latitude du satellite, l'écart de puissance thermique cible est positif sur les plages d'élévation solaire positive, et négatif sur les plages d'élévation solaire négative ;
- pour contrebalancer une diminution de l'argument de latitude du satellite, l'écart de puissance thermique cible est négatif sur les plages d'élévation solaire positive et positif sur les plages d'élévation solaire négative.

Dans un mode de mise en œuvre, l'écart de puissance thermique cible est constant entre deux passages à zéro consécutifs de l'élévation solaire.

Dans un mode de mise en œuvre, la loi de consigne thermique est nulle pour une élévation solaire nulle.

Dans un mode de mise en œuvre, la loi de consigne thermique est nulle pour une plage de valeurs d'élévation solaire inférieures présentant une valeur absolue inférieure à une valeur seuil positive.

Dans un mode de mise en œuvre, la valeur seuil positive est inférieure ou égale à treize degrés.

Dans un mode de mise en œuvre, l'écart de puissance thermique cible est compris entre -100 Watts et 100 Watts.

Dans un mode de mise en œuvre, la loi de consigne thermique est appliquée à l'au moins un réchauffeur de l'une des deux faces uniquement.

Dans un mode de mise en œuvre, la loi de consigne thermique est appliquée aux réchauffeurs des deux faces.

Dans un mode de mise en œuvre, la fenêtre angulaire prédéterminée est de plus ou moins deux degrés autour d'un argument de latitude de mission du satellite.

L'invention concerne également un produit programme d'ordinateur. Selon l'invention, le produit programme d'ordinateur comporte un ensemble d'instructions de code de programme qui, lorsqu'elles sont exécutées par un processeur, configurent ledit processeur pour mettre en œuvre un procédé de contrôle d'orbite selon l'invention.

L'invention concerne également un satellite comportant un corps ayant deux faces opposées sensiblement parallèles entre elles comprenant chacune au moins un réchauffeur. Selon l'invention, le satellite comporte :

- des moyens pour déterminer une évolution d'une dérive libre d'un argument de latitude du satellite ;
- des moyens pour appliquer une loi de consigne thermique à au moins un réchauffeur desdites faces opposées du corps, en fonction de l'élévation solaire, pour créer un écart de puissance thermique cible entre les deux faces opposées, lequel écart de puissance thermique est à l'origine d'une force présentant une composante tangentielle à une orbite du satellite destinée à contrebalancer la dérive libre de l'argument de latitude du satellite et permettre à l'argument de latitude de rester dans une fenêtre angulaire prédéterminée.

**Brève description des figures**

La Figure 1 est une représentation schématique d'un mode de réalisation d'un satellite.

La Figure 2 est une représentation schématique d'une orbite d'un satellite et de ses caractéristiques.

La Figure 3 est une représentation schématique d'une orbite d'un satellite illustrant le repère satellite.

La Figure 4 est une vue de détail de la figure 3 faisant apparaître le repère orbital local.

La Figure 5 est une représentation schématique d'une orbite d'un satellite illustrant l'évolution du satellite le long de cette orbite dans le cas d'une élévation solaire nulle.

La Figure 6 est une représentation schématique d'une orbite d'un satellite illustrant l'évolution du satellite le long de cette orbite dans le cas d'une élévation solaire strictement positive.

La Figure 7 est une représentation schématique du procédé selon l'invention.

La Figure 8 représente les évolutions de l'écart de puissance thermique cible et de l'élévation solaire au cours du temps, dans un mode de mise en œuvre du procédé de l'invention.

La Figure 9 représente l'évolution de la dérive de l'argument de latitude au cours du temps en fonction des cas de correction, en particulier dans le cas d'une correction selon l'invention dans le mode de mise en œuvre du procédé de la figure 8.

**Description détaillée**

Dans toute la description, de même que sur les dessins, les vecteurs sont indiqués en caractères gras afin d'alléger les notations.

Sur les dessins, le sens de rotation du satellite autour de la Terre est indiqué par une flèche présentant un trait double.

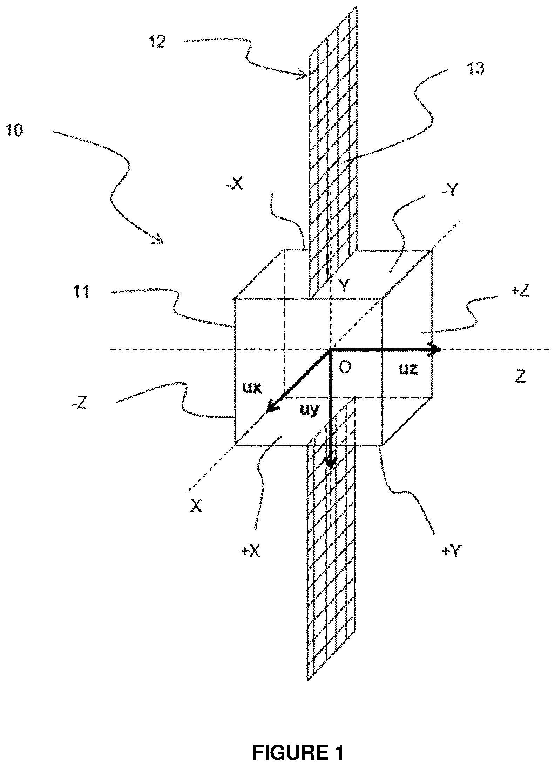

La figure 1 représente schématiquement un satellite 10 auquel est associé un repère satellite centré sur un centre de masse O dudit satellite. Le repère satellite comporte trois axes X, Y, Z portés respectivement par des vecteurs unitaires **ux**, **uy** et **uz** constituant une base orthonormée directe du repère satellite.

Le repère satellite est lié à un corps 11 du satellite. Dans l'exemple non limitatif illustré par la figure 1, le corps 11 a sensiblement une forme de parallélépipède rectangle, et l'axe X est orthogonal à des faces +X et -X du corps 11, l'axe Y est orthogonal à des faces +Y et -Y du corps 11, l'axe Z est orthogonal à des faces +Z et -Z du corps 11, les vecteurs **ux**, **uy** et **uz** étant orientés respectivement depuis les faces -X, -Y, et -Z vers les faces +X, +Y et +Z.

La face +Z porte par exemple un instrument (non illustré) d'une charge utile du satellite 10 et doit être dirigée vers la Terre T pour que le satellite puisse réaliser sa mission.

L'homme du métier comprendra que la convention adoptée ici pour définir le repère satellite n'est pas limitative de l'invention qui pourrait être décrite de manière équivalente en adoptant d'autres conventions sans que l'invention en soit modifiée. De la même manière, l'homme du métier comprendra que l'invention peut être appliquée à une forme du satellite autre que parallélépipédique rectangle décrite ici.

Tel qu'illustré sur la figure 1, le satellite 10 comporte deux générateurs solaires 12 disposés de part et d'autre dudit corps. Chacun des générateurs solaires 12 comporte, sur une face, une surface photosensible 13 qui doit être orientée en direction du Soleil S pour générer de l'énergie électrique. Dans l'exemple illustré sur la figure 1, les générateurs solaires 12 sont portés par les faces +Y et -Y du corps 11. Les générateurs solaires 12 s'étendent ainsi parallèlement à l'axe Y.

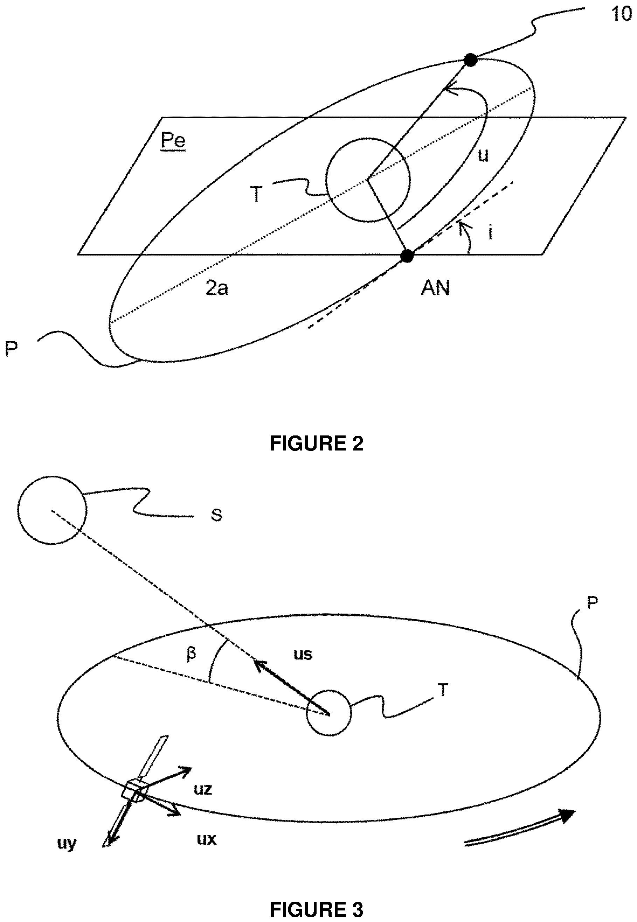

En référence à la figure 2, le satellite 10 évolue le long d'une orbite elliptique présentant une inclinaison i par rapport au plan équatorial terrestre Pe. A titre d'exemple, dans le cadre du système de positionnement par satellites Galileo, l'inclinaison i est égale à 56°.

Une position du satellite 10 le long de l'orbite est repérée par un argument de latitude u défini comme l'angle, dans un plan orbital P contenant l'orbite, entre le nœud ascendant AN (*Ascending Node* en terminologie anglo-saxonne) et le satellite 10.

L'orbite du satellite 10 est définie notamment par son demi-grand axe a.

Dans le cadre des systèmes de positionnement par satellites, l'argument de latitude u est contraint dans une fenêtre angulaire de spécification prédéterminée pour contrôler la position du satellite afin d'assurer une couverture suffisante de la Terre par l'ensemble des satellites. A titre d'exemple non limitatif, une fenêtre angulaire de plus ou moins deux degrés est définie, dans le cadre du système Galileo, par rapport à la position nominale du satellite.

On entend par « position nominale du satellite » la position théoriquement attendue dans le cadre d'un mouvement déterministe du satellite.

En référence à la figure 3, il est défini un vecteur soleil **us**, comme étant un vecteur unitaire porté par une droite passant par le centre de masse de la terre T et le centre de masse du Soleil S, et orienté vers ledit centre de masse du Soleil. Une élévation solaire β est définie comme l'angle formé par le vecteur soleil **us** et sa projection orthogonale sur le plan orbital P du satellite 10.

Dans le cadre de l'invention, une loi d'attitude dite de pilotage lacet (« *Yaw steering* » en terminologie anglo-saxonne) est appliquée au satellite 10, de sorte que :

- le vecteur **uz** est toujours dirigé vers le centre de masse de la Terre T afin que l'instrument présent sur la face +Z soit dirigé vers la Terre T ;
- le vecteur **uy** est sensiblement orthogonal au vecteur soleil **us** ; et
- la face +X portant des horloges ne soit jamais orientée face au Soleil afin d'assurer la stabilité thermique desdites horloges.

Au cours de la vie du satellite 10, les générateurs solaires 12 peuvent être orientés par rotation autour de l'axe Y afin que la surface photosensible 13 soit orientée en direction du soleil S afin d'optimiser leur efficacité.

Les faces +Y et -Y du corps 11 satellite 10 comprennent chacune une surface émissive, ou radiateur, permettant d'évacuer la chaleur produite par les éléments électroniques chauffants disposés dans le corps 11 dudit satellite. La dissipation thermique engendrée par les radiateurs est asymétrique, c'est-à-dire que les radiateurs ne dégagent pas la même quantité de chaleur.

Cette asymétrie engendre sur le satellite 10 une force de perturbation orbitale $F_Y$ selon l'axe Y du repère satellite, définie par la relation :

$$F_Y = -\frac{2}{3}\frac{\Delta P}{c}$$

expression dans laquelle :

- $F_Y$ correspond à la force de perturbation orbitale selon l'axe Y ;
- $\Delta P$ correspond à l'écart de dissipation thermique entre les faces +Y et -Y ;
- c correspond à la vitesse de la lumière.

Plus précisément, on a la relation :

$$\Delta P = P_{+Y} - P_{-Y}$$

expression dans laquelle :

- $P_{+Y}$ correspond à la puissance thermique dissipée par le radiateur situé sur la face +Y ;
- $P_{-Y}$ correspond à la puissance thermique dissipée par le radiateur situé sur la face -Y ;

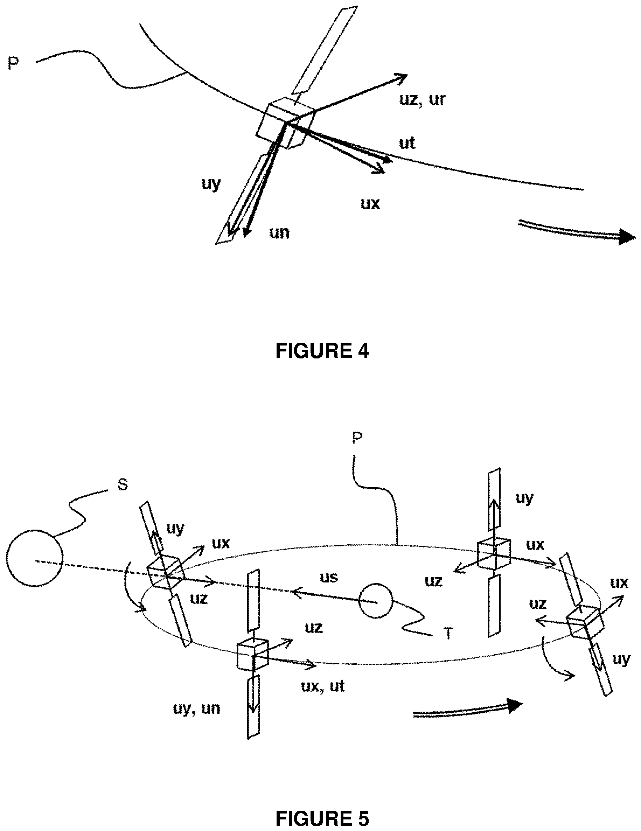

En référence à la figure 4, on définit un repère orbital local (ORF ou *Orbital Reference Frame* en terminologie anglo-saxonne) centré sur le centre de masse O du satellite 10 et défini par une base orthonormée directe formée des vecteurs **ut**, **un**, **ur.**

Le vecteur **ut** est un vecteur tangentiel à l'orbite et orienté dans le sens du mouvement du satellite 10. Le vecteur **ur** est sensiblement colinéaire au vecteur **uz** et orienté vers le centre de masse de la Terre T. Le vecteur **un** est un vecteur normal au plan orbital P, orienté de telle manière que le trièdre **ut**, **un**, **ur** forme une base orthonormée directe.

La force de perturbation orbitale $F_Y$ selon l'axe Y du repère satellite présente une composante selon le vecteur tangentiel **ut** du repère orbital local ORF à l'origine d'une accélération tangentielle $\gamma_t$ selon un axe tangentiel porté par ledit vecteur tangentiel, dans ce même repère. L'accélération tangentielle $\gamma_t$, moyennée sur une période orbitale, s'exprime selon la formule suivante :

$$\gamma_t = -\frac{2F_y}{m\pi}\sin(\beta)\,K(\cos^2(\beta))$$

$$= \frac{4\Delta P}{3m\pi c}\sin(\beta)\,K(\cos^2(\beta))$$

expression dans laquelle :

- $\gamma_t$ correspond à l'accélération tangentielle du satellite due à la force de perturbation orbitale $F_Y$ ;
- m correspond à la masse du satellite ;
- K désigne l'intégrale elliptique complète de première espèce ;
- $\beta$ correspond à l'élévation solaire.

La figure 5 représente une révolution du satellite 10 autour de la Terre T dans le cas d'une élévation solaire $\beta$ nulle. Le soleil S est alors sensiblement dans le plan orbital P et, du fait de la loi d'attitude de *Yaw Steering*, l'axe Y est sensiblement perpendiculaire audit plan orbital. Ainsi, la dissipation thermique par les radiateurs agit selon une direction sensiblement perpendiculaire au plan orbital, et l'accélération tangentielle $\gamma_t$ est sensiblement nulle. Au cours de la révolution du satellite 10 autour de la Terre T, les radiateurs ont donc un impact sensiblement nul sur l'accélération tangentielle dudit satellite.

Les cas d'élévation solaire $\beta$ nulle se produisent deux fois par an, et sont séparés d'une période de six mois.

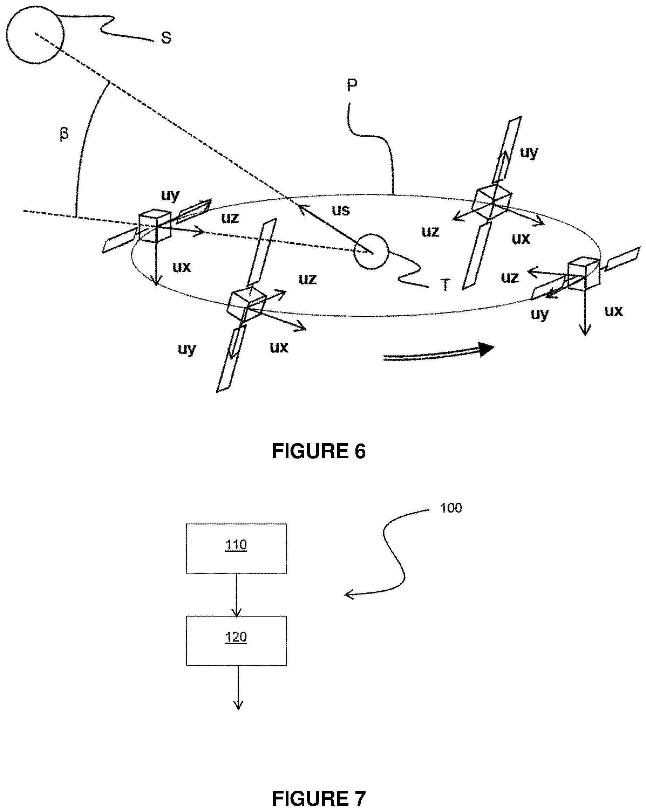

La figure 6 représente une révolution du satellite 10 dans le cas d'une élévation solaire $\beta$ strictement positive. Dans ce cas de figure, les radiateurs ont un impact non négligeable sur l'accélération tangentielle du satellite, en particulier lors des phases durant lesquelles l'axe X est sensiblement perpendiculaire au plan orbital P. Il convient de noter que, en raison de la loi de *Yaw steering* appliquée au satellite 10, plus l'élévation solaire $\beta$ est importante, plus l'impact des radiateurs va être important. En effet, une augmentation de l'élévation solaire $\beta$ tend à incliner le satellite de sorte que l'axe Y se rapproche de l'axe tangentiel porté par le vecteur tangentiel **ut**, et l'amplitude de la force de perturbation orbitale devient alors plus importante selon cet axe.

Dans le cas de l'élévation solaire $\beta$ strictement positive, l'accélération tangentielle $\gamma_t$ subie par le satellite et due à la dissipation thermique asymétrique est positive si la dissipation thermique est plus importante au niveau de la face +Y qu'au niveau de la face -Y, et négative dans le cas contraire. Dans le premier cas, le caractère asymétrique de la dissipation thermique tend à diminuer une dérive $\Delta u$ de l'argument de latitude u, dans le second cas, il tend à l'augmenter.

On entend par « dérive de l'argument de latitude » une différence entre l'argument de latitude u réel, ou observé, et l'argument de latitude théoriquement attendu $u_0$ dans le cadre d'un mouvement déterministe du satellite :

$$\Delta u = u - u_0$$

Le cas d'une élévation solaire $\beta$ strictement négative n'est pas représenté mais est similaire, *mutatis mutandis*, au cas de l'élévation solaire $\beta$ strictement positive illustré sur la figure 6.

Dans le cas de l'élévation solaire $\beta$ strictement négative, l'accélération tangentielle $\gamma_t$ subie par le satel-lite et due à la dissipation thermique asymétrique est négative si la dissipation thermique est plus importante au niveau de la face +Y qu'au niveau de la face -Y, et positive dans le cas contraire. Dans le premier cas, le caractère asymétrique de la dissipation thermique tend à augmen-ter la dérive $\Delta u$ de l'argument de longitude u, dans le second cas, il tend à le diminuer.

Les faces +Y et -Y comprennent également chacune au moins un réchauffeur, permettant, au moyen de résistances, d'apporter si nécessaire de la chaleur aux équipements du satellite.

En référence à la figure 7, l'invention concerne un procédé de contrôle d'orbite 100 pour un satellite 10 tel que décrit précédemment, permettant de corriger les effets de la dissipation thermique des radiateurs dudit satellite sur l'argument de latitude u du satellite 10.

Le procédé de contrôle d'orbite 100 selon l'invention comporte une étape 110 de détermination de l'évolution d'une dérive libre de l'argument de latitude du satellite 10 en fonction de l'élévation solaire $\beta$, et une étape 120 de contrôle de la dérive de l'argument de latitude du satellite 10.

On entend par « évolution d'une dérive libre de l'argument de latitude » les variations de l'argument de latitude du satellite, au cours du temps, et donc en fonction de l'élévation solaire, en l'absence de correction visant à contenir cette dérive.

L'évolution de la dérive libre de l'argument de latitude du satellite est ainsi déterminée à l'aide de modèles et de moyens de calculs connus de l'homme du métier, en début de procédé, au cours de l'étape 110 de détermination de l'évolution de la dérive libre de l'argument de latitude.

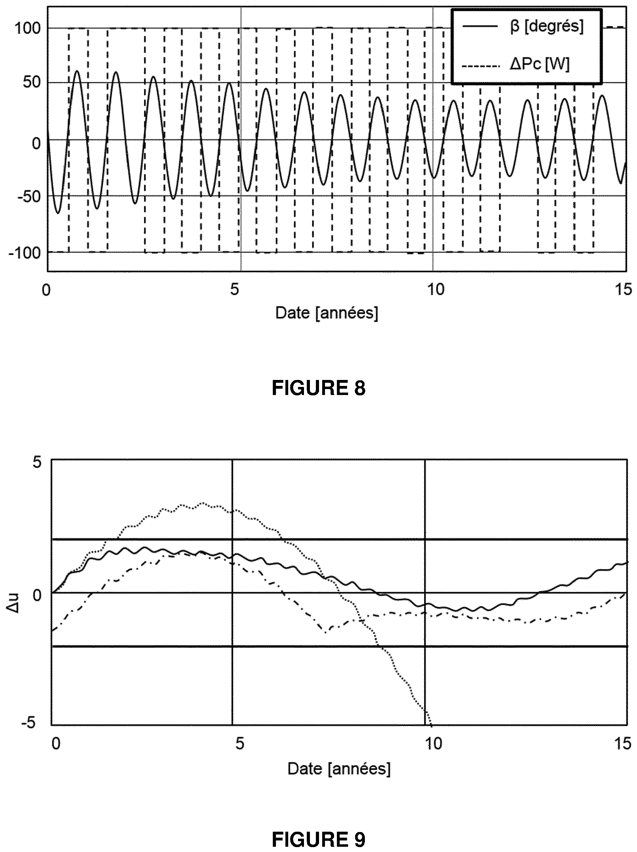

La figure 9 illustre l'évolution d'une dérive de l'argument de latitude $\Delta u$ en fonction du temps dans les trois cas suivants :

- absence de correction de l'argument de latitude u (trait pointillés) ;
- correction standard de l'argument de latitude u, environ une fois tous les sept ans (trait mixte) ;
- correction de l'argument de latitude u selon le procédé de l'invention (trait plein).

Une fenêtre angulaire prédéterminée de plus ou moins deux degrés est délimitée par des traits épais.

En référence à la figure 9, il peut être observé une évolution divergente de l'argument de latitude du satellite au cours du temps, avec un premier dépassement par valeurs positives de la fenêtre angulaire prédéterminée au cours de la deuxième année de mission du satellite, un retour dans la fenêtre angulaire prédéterminée aux alentours de la septième année puis un second dépassement par valeurs négatives aux environs de la neuvième année de mission.

Au cours de l'étape 120 ultérieure, la dérive de l'argument de latitude du satellite est contrôlée au moyen des réchauffeurs des faces +Y et -Y du satellite 10. Au cours de cette étape 120 de contrôle des réchauffeurs, une loi de consigne thermique est appliquée à au moins un des réchauffeurs afin d'obtenir un écart de puissance thermique cible $\Delta P_c$ entre les faces +Y et -Y du satellite.

La consigne thermique vise à contrebalancer au moins partiellement l'effet sur l'argument de latitude du satellite de la dissipation asymétrique due aux radiateurs.

Dans un mode de mise en œuvre, la consigne thermique n'est appliquée qu'aux réchauffeurs de l'une des deux faces +Y et -Y.

Dans un mode de mise en œuvre alternatif, la consigne thermique est appliquée aux réchauffeurs des deux faces.

La figure 8 illustre l'évolution d'un écart de puissance thermique cible $\Delta P_c$ entre les faces +Y et -Y du satellite au cours de la durée de vie dudit satellite, en fonction de l'évolution de l'élévation solaire β, dans un mode de mise en œuvre du procédé de l'invention.

En référence à la figure 8, entre deux passages à zéro consécutifs de l'élévation solaire β est imposé un écart de puissance thermique cible $\Delta P_c$ constant entre les deux faces +Y et - Y du satellite. Les valeurs des écarts de puissance thermique cibles dépendent de l'évolution de la dérive libre de l'argument de latitude déterminée lors de l'étape 110. L'homme du métier comprendra qu'une loi de consigne thermique imposant un écart de puissance thermique cible non constant entre deux passages à zéro consécutifs peut également être envisagée.

En référence à la figure 8, l'écart de puissance thermique cible $\Delta P_c$ est fixé au cours des premiers mois à 100 Watts pour les élévations solaires β strictement positives et à -100 Watts pour les élévations solaires β strictement négatives. La consigne thermique est annulée pour une élévation solaire nulle.

Lors des phases d'élévation solaire strictement positive, la dissipation thermique est alors plus importante au niveau de la face +Y et l'accélération tangentielle $\gamma_t$ est positive, ce qui tend à augmenter le demi-grand axe a de l'orbite du satellite 10 et diminuer la dérive de l'argument de latitude u.

Lors des phases d'élévation solaire strictement négative, la dissipation thermique est plus importante au niveau de la face -Y et l'accélération tangentielle $\gamma_t$ est positive, ce qui tend à augmenter le demi-grand axe a de l'orbite du satellite 10 et diminuer l'argument de latitude u.

En référence à la figure 9, l'impact de cette loi de contrôle au cours des premières années tend à ralentir la dérive de l'argument de latitude du satellite.

L'impact sur le long terme de cette consigne est déterminé par l'homme du métier à l'aide de modèles et de moyens de calcul connus, ce qui permet de prédire l'inversion de la dérive de l'argument de latitude du satellite et une diminution dudit argument de latitude. La détermination de cet impact est avantageusement réalisée en début de mission du satellite, afin d'établir les valeurs de consigne nécessaires pour rester dans la fenêtre angulaire prédéterminée, mais peut être réalisée de manière récursive au cours de la vie du satellite. Les valeurs de consigne peuvent ainsi être déterminées en début de procédé ou ajustées tout au long de la mission du satellite, de manière optimale, de sorte à être suffisamment importantes pour permettre à l'argument de latitude de rester dans la fenêtre prédéterminée, et suffisamment faibles pour limiter les dépenses d'énergie.

En particulier, les valeurs d'écart de puissance thermique cible $\Delta P_c$ peuvent être fixées à d'autres valeurs que 100W ou -100W. En particulier, plus ces valeurs sont importantes, plus l'impact du contrôle sur la dérive de l'argument de latitude est important, c'est-à-dire que le procédé tend à contrebalancer plus rapidement la dérive de l'argument de latitude du satellite.

En référence à la figure 9, les valeurs d'écart de puissance thermique cible sont inversées après une période d'environ deux ans, si bien qu'un écart de puissance thermique cible de -100W est appliqué pour les élévations solaires strictement positives et un écart de puissance thermique cible de 100W est appliqué pour les élévations solaires strictement négatives. Cette inversion de consigne tend à ralentir la diminution de l'argument de latitude.

Le changement dans la loi de contrôle est appliqué dès lors que la consigne appliquée avant l'inversion a permis d'inverser la tendance de dérive de l'argument de latitude, ce qui peut être déterminé à tout moment à l'aide de modèles et de moyens de calcul connus permettant de prédire la position du satellite en fonction des perturbations qu'il subit, et donc notamment aussi en fonction de la consigne appliquée aux réchauffeurs.

Il peut être noté que la consigne thermique appliquée aux réchauffeurs a un impact sur la dérivée seconde de l'argument de latitude par rapport au temps, en conséquence, les changements de consigne ne coïncident pas nécessairement avec les inversions de tendance de dérive de l'argument de latitude du satellite.

En référence à la figure 9, une nouvelle inversion des consignes est appliquée aux alentours de la treizième année pour tendre à ralentir l'augmentation de l'argument de latitude. L'inversion de la tendance de dérive de l'argument de latitude, ici le passage d'une tendance de diminution de l'argument de latitude à une tendance d'augmentation dudit argument de latitude, intervient environ un an plus tôt.

Comme il a été mentionné précédemment, l'impact des radiateurs sur l'orbite du satellite est globalement nul lorsque l'élévation solaire β est nulle, il n'est donc pas nécessaire d'appliquer une correction dans ce cas-là ; la consigne thermique est donc préférentiellement nulle à élévation solaire nulle.

Dans un mode de mise en œuvre du procédé selon l'invention, la consigne thermique est appliquée à l'une seulement des deux faces +Y et -Y entre deux passages à zéro de l'élévation solaire, puis à l'autre face au cours des six mois suivants, et ainsi de suite.

Dans un mode préféré de mise en œuvre du procédé selon l'invention, la consigne thermique est annulée lorsque l'élévation solaire est inférieure en valeur absolue à une valeur seuil. En effet, lorsque l'élévation solaire est suffisamment faible, l'impact de la dissipation thermique asymétrique, évoluant au premier ordre selon une loi sinus en fonction de l'élévation solaire, peut-être négligé ; par ailleurs, les besoins en puissance de la batterie durant les phases d'éclipse associées à une faible élévation solaire limitent la puissance disponible pour action de correction éventuelle par les réchauffeurs. Cette valeur seuil est par exemple sensiblement égale à treize degrés.

En référence à la figure 9, en l'absence de correction, la dérive de l'argument de latitude $\Delta u$ présente un comportement divergent et n'est pas contenue dans la fenêtre angulaire prédéterminée.

Les deux évolutions de dérive de l'argument de latitude dans le cadre des corrections standard et selon l'invention permettent de rester dans la fenêtre angulaire sur toute la durée de vie du satellite d'environ quinze ans.

Le procédé selon l'invention permet d'ajuster l'argument de latitude du satellite tout au long de sa durée de vie, au lieu d'une période pouvant aller généralement de cinq à sept ans pour une correction standard, et ainsi d'assurer une disponibilité du satellite tout au long de cette durée de vie, en comparaison d'un maintien à poste standard nécessitant une interruption de fonctionnement du satellite.

L'invention permet également d'éviter la consommation de xénon pour le maintien à poste du satellite.

Le fait que la consigne thermique soit annulée durant les phases d'élévation solaire sensiblement nulle permet de s'affranchir des contraintes en limitation de puissance pour le fonctionnement de la batterie.

L'invention s'applique également à des satellites en orbite autour d'autres planètes, par exemple Mars.

**Revendications**

1. Procédé de contrôle d'orbite (100) d'un satellite (10) comportant un corps (11) ayant deux faces opposées sensiblement parallèles entre elles comprenant chacune au moins un réchauffeur, le procédé étant **caractérisé en ce qu'**il comporte :

   - une étape (110) de détermination d'une évolution d'une dérive libre d'un argument de latitude (u) du satellite (10) ;
   - une étape (120) de contrôle de la dérive de l'argument de latitude (u) du satellite au cours de laquelle une loi de consigne thermique est appliquée à au moins un des réchauffeurs, en fonction de l'élévation solaire $\beta$, pour créer un écart de puissance thermique cible $\Delta Pc$ entre les deux faces opposées, lequel écart de puissance thermique est à l'origine d'une force présentant une composante tangentielle à une orbite du satellite destinée à contrebalancer la dérive libre de l'argument de latitude (u) du satellite et permettre à l'argument de latitude (u) de rester dans une fenêtre angulaire prédéterminée.

2. Procédé (100) selon la revendication 1 **caractérisé en ce que** l'étape (120) de contrôle des réchauffeurs comporte au moins une phase de détermination d'un impact de la loi de consigne thermique sur le long terme afin d'établir des valeurs de consigne nécessaires pour rester dans la fenêtre angulaire prédéterminée.

3. Procédé (100) selon la revendication 1 ou la revendication 2 **caractérisé en ce que** la loi de consigne thermique est telle que :

   - pour contrebalancer une augmentation de l'argument de latitude (u) du satellite, l'écart de puissance thermique cible $\Delta Pc$ est positif sur les plages d'élévation solaire positive, et négatif sur les plages d'élévation solaire négative ;
   - pour contrebalancer une diminution de l'argument de latitude (u) du satellite, l'écart de puissance thermique cible $\Delta Pc$ est négatif sur les plages d'élévation solaire positive et positif sur les plages d'élévation solaire négative.

4. Procédé selon la revendication 3 **caractérisé en ce que** l'écart de puissance thermique cible $\Delta Pc$ est constant entre deux passages à zéro consécutifs de l'élévation solaire.

5. Procédé (100) selon l'une quelconque des revendications précédentes **caractérisé en ce que** la loi de consigne thermique est nulle pour une élévation solaire $\beta$ nulle.

6. Procédé (100) selon l'une quelconque des revendications 1 à 3 **caractérisé en ce que** la loi de consigne thermique est nulle pour une plage de valeurs d'élévation solaire inférieures présentant une valeur absolue inférieure à une valeur seuil positive.

7. Procédé (100) selon la revendication 6 **caractérisé en ce que** la valeur seuil positive est inférieure ou égale à treize degrés.

8. Procédé (100) selon l'une quelconque des revendications précédentes **caractérisé en ce que** l'écart de puissance thermique cible $\Delta Pc$ est compris entre -100 Watts et 100 Watts.

9. Procédé (100) selon l'une quelconque des revendications 1 à 8 **caractérisé en ce que** la loi de consigne thermique est appliquée à l'au moins un réchauffeur de l'une des deux faces uniquement.

**10.** Procédé (100) selon l'une quelconque des revendications 1 à 8 **caractérisé en ce que** la loi de consigne thermique est appliquée aux réchauffeurs des deux faces.

**11.** Procédé (100) selon l'une quelconque des revendications précédentes **caractérisé en ce que** la fenêtre angulaire prédéterminée est de plus ou moins deux degrés autour d'un argument de latitude de mission du satellite.

**12.** Produit programme d'ordinateur **caractérisé en ce qu'**il comporte un ensemble d'instructions de code de programme qui, lorsqu'elles sont exécutées par un processeur, configurent ledit processeur pour mettre en œuvre un procédé de contrôle d'orbite (100) selon l'une quelconque des revendications 1 à 11.

**13.** Satellite (10) comportant un corps (11) ayant deux faces opposées sensiblement parallèles entre elles comprenant chacune au moins un réchauffeur, ledit satellite étant **caractérisé en ce qu'**il comporte :

- des moyens configurés pour déterminer une évolution d'une dérive libre d'un argument de latitude (u) du satellite (10) ;
- des moyens configurés pour appliquer une loi de consigne thermique à au moins un réchauffeur desdites faces opposées du corps (11), en fonction de l'élévation solaire β, pour créer un écart de puissance thermique cible ΔPc entre les deux faces opposées, lequel écart de puissance thermique est à l'origine d'une force présentant une composante tangentielle à une orbite du satellite destinée à contrebalancer la dérive libre de l'argument de latitude (u) du satellite et permettre à l'argument de latitude (u) de rester dans une fenêtre angulaire prédéterminée.

**Patentansprüche**

**1.** Verfahren (100) zum Steuern einer Umlaufbahn eines Satelliten (10), umfassend einen Körper (11), der zwei gegenüberliegende Flächen aufweist, die im Wesentlichen parallel zueinander sind, wobei jede mindestens eine Heizeinrichtung umfasst, wobei das Verfahren **dadurch gekennzeichnet ist, dass** es Folgendes umfasst:

- einen Schritt (110) des Bestimmens einer Entwicklung einer freien Abweichung eines Breitengradarguments (u) des Satelliten (10);
- einen Schritt (120) des Steuerns der Abweichung des Breitengradarguments (u) des Satelliten, während deren ein thermisches Sollwertgesetz auf mindestens eine der Heizeinrichtungen in Abhängigkeit von der Sonnenhöhe β angewendet wird, um eine Differenz in der thermischen Zielleistung ΔPc zwischen den beiden gegenüberliegenden Flächen zu erzeugen, wobei diese Differenz in der thermischen Leistung der Ursprung einer Kraft ist, die eine Tangentialkomponente zu einer Umlaufbahn des Satelliten aufweist, die dazu ausgelegt ist, die freie Abweichung des Breitengradarguments (u) des Satelliten auszugleichen und dem Breitengradargument (u) zu ermöglichen, innerhalb eines vorbestimmten Winkelfensters zu bleiben.

**2.** Verfahren (100) nach Anspruch 1, **dadurch gekennzeichnet, dass** der Schritt (120) des Steuerns der Heizeinrichtungen mindestens eine Phase des Bestimmens eines langfristigen Einflusses des thermischen Sollwertgesetzes umfasst, um erforderliche Sollwerte festzulegen, um innerhalb des vorbestimmten Winkelfensters zu bleiben.

**3.** Verfahren (100) nach Anspruch 1 oder Anspruch 2, **dadurch gekennzeichnet, dass** das thermische Sollwertgesetz derart ist, um:

- eine Erhöhung des Breitengradarguments (u) des Satelliten auszugleichen, wobei die Differenz in der thermischen Zielleistung ΔPc bei positiven Sonnenhöhenbereichen positiv und bei negativen Sonnenhöhenbereichen negativ ist;
- eine Verringerung des Breitengradarguments (u) des Satelliten auszugleichen, wobei die Differenz in der thermischen Zielleistung ΔPc in den positiven Sonnenhöhenbereichen negativ und in den negativen Sonnenhöhenbereichen positiv ist.

**4.** Verfahren nach Anspruch 3, **dadurch gekennzeichnet, dass** die Differenz in der thermischen Zielleistung ΔPc zwischen zwei aufeinanderfolgenden Nulldurchgängen der Sonnenhöhe konstant ist.

**5.** Verfahren (100) nach einem der vorhergehenden Ansprüche, **dadurch gekennzeichnet, dass** das thermische Sollwertgesetz für eine Sonnenhöhe ß von Null null ist.

**6.** Verfahren (100) nach einem der Ansprüche 1 bis 3, **dadurch gekennzeichnet, dass** das thermische Sollwertgesetz für einen Bereich niedrigerer Sonnenhöhenwerte mit einem Absolutwert kleiner als ein positiver Schwellenwert null ist.

**7.** Verfahren (100) nach Anspruch 6, **dadurch gekennzeichnet, dass** der positive Schwellenwert kleiner oder gleich dreizehn Grad ist.

**8.** Verfahren (100) nach einem der vorhergehenden Ansprüche, **dadurch gekennzeichnet, dass** die Differenz in der thermischen Zielleistung ΔPc zwischen -100 Watt und 100 Watt liegt.

9. Verfahren (100) nach einem der Ansprüche 1 bis 8, **dadurch gekennzeichnet, dass** das thermische Sollwertgesetz lediglich auf die mindestens eine Heizeinrichtung einer der beiden Flächen angewendet wird.

10. Verfahren (100) nach einem der Ansprüche 1 bis 8, **dadurch gekennzeichnet, dass** das thermische Sollwertgesetz auf die Heizeinrichtungen der beiden Flächen angewendet wird.

11. Verfahren (100) nach einem der vorhergehenden Ansprüche, **dadurch gekennzeichnet, dass** das vorbestimmte Winkelfenster plus oder minus zwei Grad um ein Breitengradargument einer Satellitenmission liegt.

12. Computerprogrammprodukt, **dadurch gekennzeichnet, dass** es einen Satz von Programmcodeanweisungen umfasst, die, wenn sie von einem Prozessor ausgeführt werden, den Prozessor dazu konfigurieren, ein Verfahren (100) zum Steuern einer Umlaufbahn nach einem der Ansprüche 1 bis 11 zu implementieren.

13. Satellit (10), umfassend einen Körper (11), der zwei gegenüberliegende Flächen aufweist, die im Wesentlichen parallel zueinander sind, wobei jede mindestens eine Heizeinrichtung umfasst, wobei der Satellit **dadurch gekennzeichnet ist, dass** er Folgendes umfasst:

   - Mittel, die zum Bestimmen einer Entwicklung einer freien Abweichung eines Breitengradarguments (u) des Satelliten (10) konfiguriert sind;
   - Mittel, die zum Anwenden eines thermischen Sollwertgesetzes auf mindestens eine Heizeinrichtung der gegenüberliegenden Flächen des Körpers (11) als eine Funktion der Sonnenhöhe ß konfiguriert sind, um eine Differenz in der thermischen Zielleistung ΔPc zwischen den beiden gegenüberliegenden Flächen zu erzeugen, wobei diese Differenz in der thermischen Leistung der Ursprung einer Kraft ist, die eine Tangentialkomponente zu einer Umlaufbahn des Satelliten aufweist, die dazu ausgelegt ist, die freie Abweichung des Breitengradarguments (u) des Satelliten auszugleichen und dem Breitengradargument (u) zu ermöglichen, innerhalb eines vorbestimmten Winkelfensters zu bleiben.

**Claims**

1. A method for monitoring an orbit (100) of a satellite (10) including a body (11) having two opposite faces substantially parallel to each other each comprising at least one heater, the method being **characterised in that** it includes:

   - a step (110) of determining an evolution of a free drift of an argument of latitude (u) of the satellite (10);
   - a step (120) of monitoring the drift of the argument of latitude (u) of the satellite during which a thermal setpoint law is applied to at least one of the heaters, according to the solar elevation β, to create a target thermal power difference ΔPc between the two opposite faces, which thermal power difference is at the origin of a force having a component tangential to an orbit of the satellite intended to counterbalance the free drift of the argument of latitude (u) of the satellite and allow the argument of latitude (u) to stay within a predetermined angular window.

2. The method (100) according to claim 1 **characterised in that** the step (120) of monitoring the heaters includes at least one phase of determining an impact of the thermal setpoint law over the long term in order to establish setpoint values necessary to remain within the predetermined angular window.

3. The method (100) according to claim 1 or claim 2 **characterised in that** the thermal setpoint law is such as:

   - to counterbalance an increase in the argument of latitude (u) of the satellite, the target thermal power difference ΔPc is positive on the positive solar elevation ranges, and negative on the negative solar elevation ranges;
   - to counterbalance a decrease in the argument of latitude (u) of the satellite, the target thermal power difference ΔPc is negative on the positive solar elevation ranges and positive on the negative solar elevation ranges.

4. The method according to claim 3, **characterised in that** the target thermal power difference ΔPc is constant between two consecutive zero crossings of the solar elevation.

5. The method (100) according to any one of the preceding claims, **characterised in that** the thermal setpoint law is zero for a zero solar elevation β.

6. The method (100) according to any one of claims 1 to 3 **characterised in that** the thermal setpoint law is zero for a range of lower solar elevation values having an absolute value less than a positive threshold value.

7. The method (100) according to claim 6 **characterised in that** the positive threshold value is less than or equal to thirteen degrees.

8. The method (100) according to any one of the preceding claims, **characterised in that** the target thermal power difference $\Delta Pc$ is comprised between -100 Watts and 100 Watts.

9. The method (100) according to any one of claims 1 to 8 **characterised in that** the thermal setpoint law is applied to the at least one heater of one of the two faces only.

10. The method (100) according to any one of claims 1 to 8 **characterised in that** the thermal setpoint law is applied to the heaters on both faces.

11. The method (100) according to any one of the preceding claims, **characterised in that** the predetermined angular window is plus or minus two degrees around a mission latitude argument of the satellite.

12. A computer program product **characterised in that** it includes a set of program code instructions which, when executed by a processor, configure said processor to implement an orbit monitoring method (100) according to any one of claims 1 to 11.

13. A satellite (10) including a body (11) having two opposite faces which are substantially parallel to each other each comprising at least one heater, said satellite being **characterised in that** it includes:

   - means configured to determine an evolution of a free drift of an argument of latitude (u) of the satellite (10);
   - means configured to apply a thermal setpoint law to at least one heater of said opposite faces of the body (11), according to the solar elevation $\beta$, to create a target thermal power difference $\Delta Pc$ between the two opposite faces, which thermal power difference is at the origin of a force having a component tangential to an orbit of the satellite intended to counterbalance the free drift of the argument of latitude (u) of the satellite and allow the argument of latitude (u) to stay within a predetermined angular window.

FIGURE 1

**FIGURE 2**

**FIGURE 3**

**FIGURE 4**

**FIGURE 5**

**FIGURE 6**

**FIGURE 7**

**FIGURE 8**

**FIGURE 9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3057579 A